# EUROPÄISCHE PATENTSCHRIFT

(11) **EP 1 656 273 B1**
(45) Veröffentlichungstag und Bekanntmachung des Hinweises auf die Patenterteilung: **19.01.2011**
(21) Anmeldenummer: 04762582.7
(22) Anmeldetag: 04.08.2004
(51) Int. Cl.: B60J 7/12

(54) **CABRIOLET-FAHRZEUG**
CONVERTIBLE
VEHICULE AUTOMOBILE DE TYPE CABRIOLET

(30) Priorität: 14.08.2003 DE 10337474
(43) Veröffentlichungstag der Anmeldung: 17.05.2006
(73) Patentinhaber: Wilhelm Karmann GmbH, 49084 Osnabrück (DE)
(72) Erfinder: HESELHAUS, Udo, 49479 Ibbenbüren (DE)
(74) Vertreter: Kronthaler, Schmidt & Coll.
(86) Internationale Anmeldenummer: PCT/DE2004/001737
(87) Internationale Veröffentlichungsnummer: WO 2005/016678

(56) Entgegenhaltungen:
- DE-C- 19 956 482
- GB-A- 448 720
- US-A- 1 799 050

## Beschreibung

Die Erfindung betrifft ein Cabriolet-Fahrzeug mit zumindest einem flexiblen Dachbereich, der auch im wesentlichen das ganze Dach umfassen kann, nach dem Oberbegriff des Anspruchs 1.

Die DE 101 40 232 A1 zeigt ein Cabriolet-Fahrzeug mit einem starren hinteren Dachteil und einem daran in Fahrtrichtung anschließenden flexiblen Dachbereich, der einen von mehreren Querspriegeln untergriffenen Dachbezug umfaßt. Die Querspriegel sind über seitliche Rahmenteile in bekannter Weise miteinander verbunden. Zum Öffnen des flexiblen Dachbereichs werden dieses Rahmenteile um vertikale Achsen gegeneinander eingeschwenkt. Hierzu dienen mehrere, an den jeweiligen Fahrzeuglängsseiten angeordnete Antriebe. Diese müssen, um eine gleichmäßige Dachbereichsverkürzung in der Öffnungsphase zu gewährleisten, miteinander synchronisiert sein, was aufwendig ist. Zudem sind ist die gezeigte Einfaltmechanik der seitlichen Rahmenteile kompliziert, und es müssen zusätzliche Maßnahmen getroffen werden, um ein unkontrolliertes Falten des Dachbezugs und dessen Einklemmen in Gelenkbereichen zu vermeiden.

Die US 1 799 050 A zeigt ein Fahrzeug mit einem über mehrere Querspriegel 21, 23 abgestützten Dachbereich, wobei der vordere Querspriegeln 23 zur Dachöffnung bei der Dachöffnung nach hinten verlagerbar ist und ihm hierzu seitliche Längsführungshilfen (einschiebbares Rohr 22) zur Zusammenwirkung mit einem Längsführungsansatz 20 (Hülse zur Aufnahme des einschiebbaren Rohrs) des dahinter liegenden Spriegels 23 zugeordnet sind.

Eine solche Konstruktion ist nur für Fahrzeuge geeignet, bei denen genau zwei Spriegel gegeneinander zu bewegen sind. Schon der zweite Spriegel muß gegen einen dritten Spriegel 17 heruntergeschoben und eingeklappt werden, der weitere Spriegel 17 wird gegen den hinteren Spriegel 26 um das untere Schwenkgelenk 16 eingefaltet.

Der Erfindung liegt das Problem zugrunde, ein Cabriolet-Fahrzeug der genannten Art hinsichtlich der Öffnungskinematik mit Verkürzung der abgestützten Dachfläche durch mehr als zwei Spriegel gegeneinander zu optimieren. Die Erfindung löst dieses Problem durch ein Cabriolet-Fahrzeug mit den Merkmalen des Anspruchs 1 . Vorteilhafte Ausgestaltungen des Gegenstandes der Erfindung ergeben sich aus den weiteren Ansprüchen 2 bis 16.

Durch die erfindungsgemäße Ausbildung nach Anspruch 1 ist eine mechanische Zwangslängsführung des flexiblen Dachbereichs bewirkt. Es ist daher verhindert, daß bei dessen Öffnung gegenüberliegende Längsseitenbereiche unterschiedlich schnell nach hinten verlagert werden und sich der Dachbereich schräg stellen kann. Während der Öffnungsbewegung liegen die Querspriegel somit auch ohne Synchronisationsmaßnahmen jederzeit parallel zueinander. Seitliche Gestängeteile sind entbehrlich, so daß sich eine große Kopfund Schulterfreiheit auch während der Dachbewegung ergibt. Durch den Querversatz von Längsführungshilfen bzw. -ansätzen von aufeinander folgenden Spriegeln läßt sich eine Mehrzahl von solchen Spriegeln zur Unterstützung der Dachfläche bereitstellen, die alle auf die gleiche Weise gegeneinander bewegt werden können. Diese kann daher lang ausgebildet sein und benötigt keine Anbindung an Gelenke im Bereich der Fensterbrüstungslinie, sondern kann zum Beispiel komplett oberhalb von Seitenscheiben liegen. Die Längsführungsansätze bzw. -hilfen können dabei jeweils gleichartig ausgebildet sein, was die Herstellung vereinfacht.

Durch ein vorteilhaftes Ineinandergreifen von Längsführungshilfen und Längsführungsansätzen - auch bei geschlossenem Dach - ist ein Einfädelvorgang der Teile entbehrlich. Die Dachöffnung ist dadurch beschleunigt.

Insbesondere wenn ein starres hinteres Dachteil vorgesehen ist, an das sich der flexible Dachbereich nach vorne hin anschließt, kann die Öffnung weiter beschleunigt werden, wenn während des Absenkens des starren Dachteils gleichzeitig die Verkürzungsbewegung des vorderen, flexiblen Dachbereichs stattfindet.

Wenn die Führungshilfen und Führungsansätze von dem Antrieb vollständig entkoppelt sind, ist die Konstruktion zudem vereinfacht.

Dabei kann für den Antrieb ein einziges Organ, etwa ein Hydraulikzylinder, ausreichend sein, wenn dieser die Antriebskraft über ein in der Längsmittelebene liegendes Scherengitter auf den flexiblen Dachbereich vermittelt. Durch die hierbei nicht zwingende, jedoch vorteilhafte Kombination mit den Längsführungsansätzen und Längsführungshilfen ist trotz des nur einen mittigen Antriebs wiederum die Parallelbewegung beider Längsseiten auch ohne seitliche Rahmenteile sichergestellt. In jedem Fall ist bei Verwirklichung des Antriebs über das zentrale Scherengitter die Kopf- und Schulterfreiheit erhöht, da seitliche Teile der Antriebskinematik, die insbesondere während der Bewegung des Daches zu Raumeinschränkungen führen, fehlen.

Weitere Vorteile und Merkmale der Erfindung ergeben sich aus einem in der Zeichnung dargestellten und nachfolgend beschriebenen Ausführungsbeispiel des Gegenstandes der Erfindung.

In der Zeichnung zeigt:
- Fig. 1: eine schematische perspektivische An- sicht eines abgebrochen dargestellten erfindungsgemäßen Cabriolet-Fahrzeugs bei geschlossenem Dach mit - der Über- sicht halber transparent dargestelltem Dachbezug,
- Fig. 2: eine ähnliche Ansicht wie Fig. 1 während der Dachöffnung mit gleichzeitig nach unten schwenkendem starrem Dachteil und sich verkürzendem flexiblem Dachbereich,

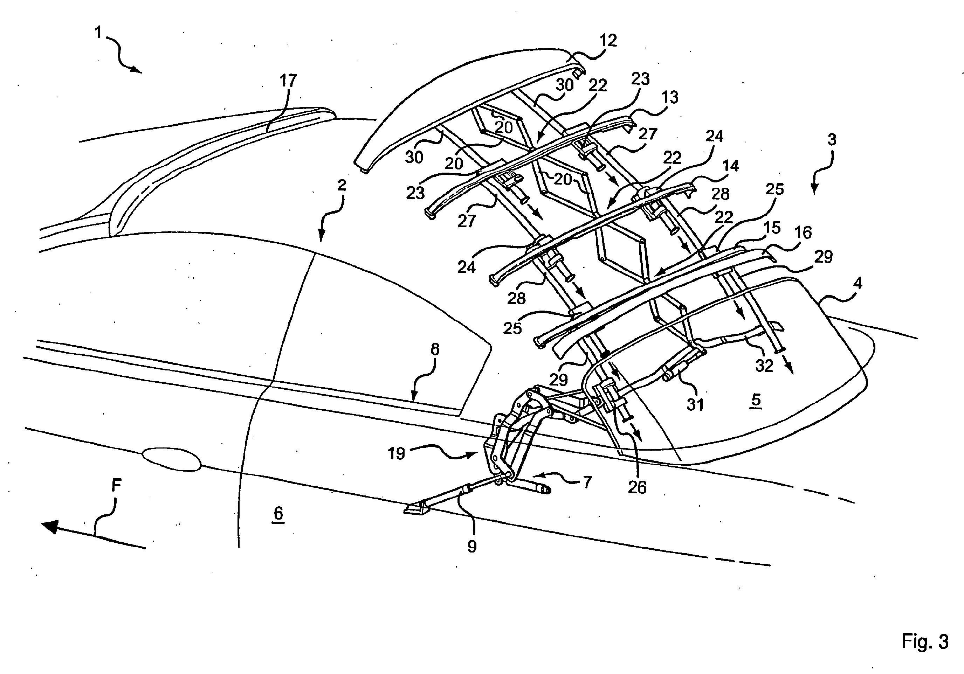

- Fig. 3: eine ähnliche Ansicht wie Fig. 2 bei weiter fortschreitender Dachöffnung bzw. in einer früheren Phase des Dach- schließens,

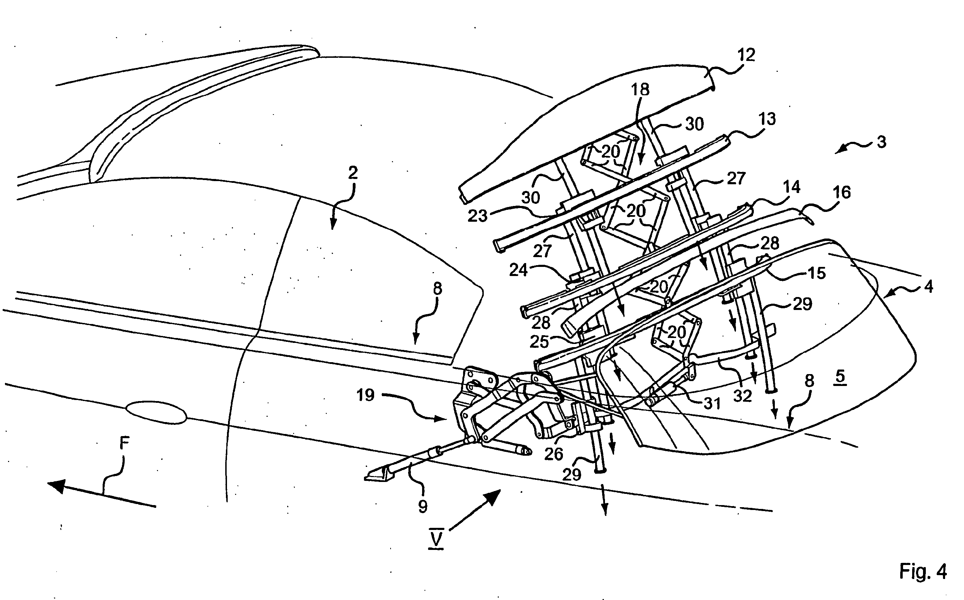

- Fig. 4: eine ähnliche Ansicht wie Fig. 3 bei weiter fortschreitender Dachöffnung bzw. in einer früheren Phase des Dach- schließens,
- Fig. 5: eine Seitenansicht etwa aus Richtung des Pfeils V in Fig. 4 auf das vollständig geöffnete Dach.

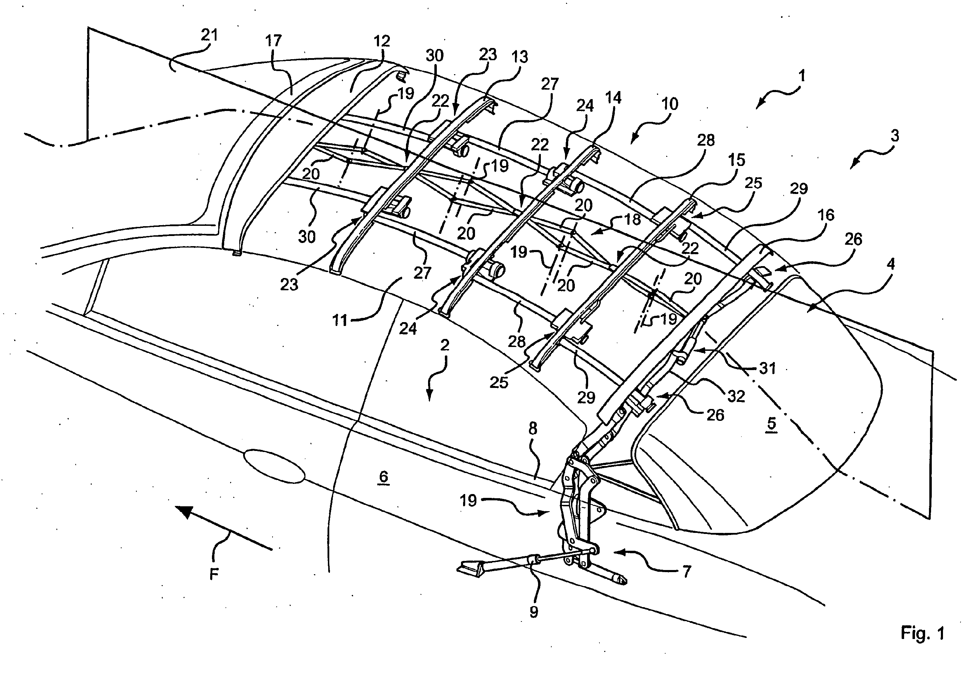

Das erfindungsgemäße Cabriolet-Fahrzeug 1 ist in Fig. 1 in seinem oberen und mittleren Bereich, der den Insassenraum 2 umfaßt, schematisch dargestellt. Dieser ist überdeckbar von einem beweglichen Dach 3, das in der Darstellung nach Fig. 1 geschlossen ist.

Im Ausführungsbeispiel umfaßt das Dach 3 ein starres hinteres Dachteil 4, das hier eine kuppelartige Heckscheibe 5 umfaßt, die außerhalb eines mittleren Durchsichtbereichs mit einer dunklen, licht- und/oder wärmeabsorbierenden Beschichtung versehen sein kann. Dieses ist an der Karosserie 6 über seitliche Hauptlager 7 schwenkbeweglich angebunden und kann vollständig in dieser unterhalb einer Fensterbrüstungslinie 8 abgelegt werden. Zum Verschwenken des hinteren Dachteils 4 um die Hauptlager 7 dienen seitliche Antriebsorgane 9, sofern ein automatisches Dachöffnen und -schließen verwirklicht werden soll.

An das starre Dachteil 4 schließt sich bei geschlossenem Dach (Fig. 1) in Fahrtrichtung F ein insgesamt mit 10 bezeichneter flexibler Dachbereich an. Dieser umfaßt einen beispielsweise textil oder aus Kunststoff gebildeten Bezug 11, der in Fig. 1 der Übersichtlichkeit halber transparent dargestellt ist. Dadurch sind mehrere den Bezug 11 abstützende, Querspriegel 12, 13, 14, 15, 16 sichtbar. Der vordere Spriegel 12 bildet hier die sog. Dachspitze, die bei geschlossenem Dach 3 mit dem Windschutzscheibenrahmen 17 verriegelt ist.

Der Bezug 11 ist weiterhin untergriffen von einem zentralen und symmetrisch zur vertikalen Fahrzeuglängsmittelebene 21 liegenden Scherengitter 18. Dieses ist zumindest mit dem vorderen Querspriegel 12 verbunden. Das Scherengitter 18 liegt in der Erstreckungsebene des flexiblen Dachbereichs 10 und weist eine Mehrzahl von senkrecht hierzu stehenden Schwenkachsen 19 auf, um die herum die einzelnen Lenker 20 des Scherengitters ein- und ausschwenkbar sind.

Durch die Lage in der Erstreckungsebene des Daches 3 ergibt sich eine minimales und flaches Packmaß für das eingefaltete Scherengitter 18 bei geöffnetem Dach. Durch die in der Längsmittelebene liegende zentrale Anordnung des Scherengitters 18 liegt es auch bei geöffnetem Dach 3 mittig in einem Bereich, in dem sich keine mit dem Hauptlager 7 verbundenen Gestängeteile 19 oder Antriebsteile 9 befinden. Zudem sind Kopf- und Schulterfreiheit durch die zentrale Anordnung signifikant erhöht. Seitliche Rahmenteile für einen Antrieb der Dacheinfaltbewegung sind vollständig entbehrlich.

In Kreuzungspunkten 22 der Lenker 20 sind diese mit den hinter der Dachspitze 12 liegenden Querspriegeln 13, 14, 15 verbunden, was nicht zwingend ist. Durch die Verbindung mit sämtlichen Spriegeln können diese jedoch beim Öffnen gleichmäßig ihren Abstand zueinander vermindern, da sie jeder für sich bei Einschwenken der Lenker 20 um die Achsen 19 mit nach hinten gezogen werden.

Der flexible Dachbereich 10 umfaßt an den Querspriegeln 13, 14, 15, jeweils beidseits der vertikalen Längsmittelebene 21 und symmetrisch zu dieser jeweils zwei Längsführungshilfen 23, 24, 25 und zwei Längsführungsansätze 27, 28, 29. Der vordere Spriegel 12 trägt zusätzlich zwei Längsführungsansätze 30, und hinter dem rückwärtigsten Spriegel 16 sind zusätzlich zwei Längsführungshilfen 26 angeordnet. Letztgenannte sind mit den Lenkern 19 der Schwenkmechanik für das hintere starre Dachteil 4 verbunden.

Die Längsführungsansätze 27, 28, 29, 30 sind als formstabile Rohrabschnitte ausgebildet und erstrecken sich in Draufsicht parallel zur Fahrzeuglängsrichtung, wobei auch eine leichte Abwinklung hierzu möglich wäre. Gegenüber der Horizontalen sind sie entweder insgesamt entsprechend der Dachwölbung leicht schräg gestellt und/oder jeweils in sich gebogen, was insbesondere bei kurzen Dächern mit starker Wölbung optisch positiv ist.

Die Längsführungshilfen 23, 24, 25, 26 sind ebenfalls formstabil und umfassen Hülsenkörper, die jeweils entsprechend der Dachkrümmung geneigt sind und in die jeweils Längsführungsansätze 27, 28, 29, 30 eingreifen. Die Weite der jeweiligen Hülse ist so bemessen, daß sie den jeweils eingreifenden Längsführungsansatz 23, 24, 25, 26 dicht umgreift, jedoch eine Relativbewegung der Teile zueinander parallel zur Erstreckung des Längsansatzes 23, 24, 25, 26 ermöglicht. Im Ausführungsbeispiel besteht die Eingriffsstellung der Teile nicht nur bei sich bewegendem oder geöffnetem Dach, sondern auch bei geschlossenem Dach, so daß keine gesonderten Maßnahmen für ein zentriertes Einfädeln vorgesehen werden müssen.

Über die Längsführungshilfen 23, 24, 25, 26 und Längsführungsansätze 27, 28, 29, 30 muß keine Antriebskraft vermittelt werden, so daß auch keine Synchronisation der Bewegung der Dachseiten erforderlich ist. Die Krafteinleitung geschieht allein über das mittig liegende Scherengitter und ein zentrales Antriebsorgan 31, das die Lenker 20 um die Achsen 19 verschwenkt.

Im einzelnen ist die Anordnung von Längsführungshilfen 23, 24, 25, 26 und Längsführungsansätzen 27, 28, 29, 30 im gezeichneten Ausführungsbeispiel wie folgt:
An der Dachspitze 12 sind symmetrisch lediglich zwei Rohrstücke 30 angeordnet, die nach hinten weisen und in Hülsen der Längsführungshilfen 23 des heckwärts benachbarten Spriegels 13 eingreifen.

Dieser weist bezüglich der vertikalen Fahrzeuglängsmittelebene 21 weiter außen liegende und ebenfalls heckwärts weisende Rohrstücke 27 als Längsführungsansätze auf, die ihrerseits in Hülsen der Längsführungshilfen 24 des heckwärts benachbarten Spriegels 14 eingreifen.

Auch dieser dritte Querspriegel weist bezüglich der vertikalen Fahrzeuglängsmittelebene 21 gegenüber seinen Längsführungshilfen 24 weiter außen liegende und ebenfalls heckwärts weisende Rohrstücke 28 als Längsführungsansätze auf, die ihrerseits in Hülsen der Längsführungshilfen 25 des heckwärts benachbarten Spriegels 15 eingreifen.

Dort wiederholen sich die Verhältnisse: Auch dieser weist bezüglich der vertikalen Fahrzeuglängsmittelebene 21 weiter außen liegende und ebenfalls heckwärts weisende Rohrstücke 29 als Längsführungsansätze auf, die dann allerdings den heckseitigen Spriegel 16 verbindungslos untergreifen und in Längsführungshilfen 26 einer hinteren Querlenkeranordnung 32 eingreifen, die über die Lenkeranordnung 19 bewegbar ist. Der Spriegel 16 sichert die Anbindung des Bezugsstoffs 11 an dem hinteren Dachteil 4.

Insgesamt sind daher die Längsführungsansätze 30, 27, 28, 29 hintereinanderliegender Spriegel 12, 13, 14, 15 bezüglich der vertikalen Längsmittelebene 21 versetzt zueinander angeordnet, nämlich derart, daß sie von vorne nach hinten immer weiter außen angeordnet sind. Eine Kollision der Rohrstücke ist daher auch bei der Dachöffnung mit sich verkürzendem Dachbereich 10 vermieden.

Gleichzeitig liegen jedoch an jedem Spriegel 13, 14, 15 die Längsführungshilfe 23, 24, 25 für den Längsführungsansatz 30, 27, 28 des jeweils vorgeordneten Spriegels und der eigene Längsführungsansatz 27, 28, 29 unmittelbar benachbart, so daß die Längsführungsansätze 27, 28, 29, 30 insgesamt einen Längsrahmen für den Dachbereich 10 ausbilden und bei geöffnetem Dach 3 unmittelbar nebeneinander liegen.

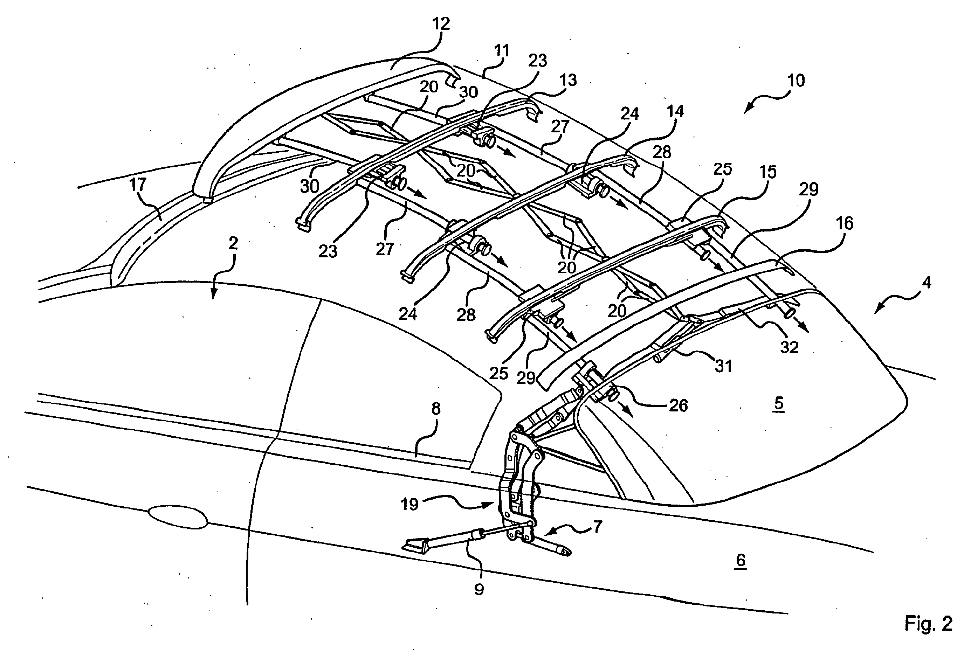

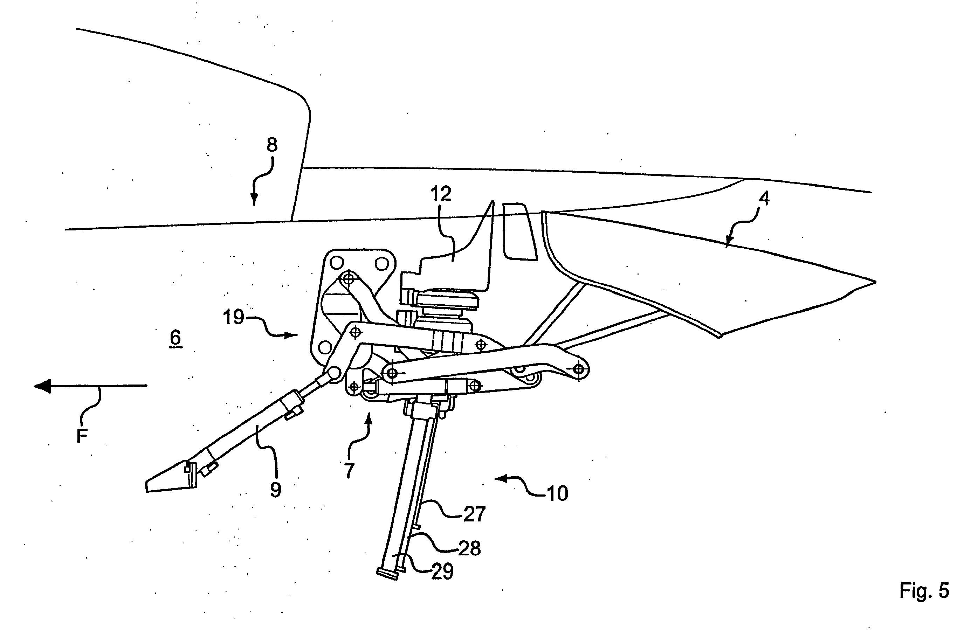

Zum Öffnen des Daches 3 werden von Anfang an (Übergang von Figur 1 zu Figur 2) sowohl das hintere Dachteil 4 in die Karosserie 6 abwärts verschwenkt als auch der vordere Dachbereich 10 verkürzt und aufwärts gestellt, so daß am Ende beide Dachteile 4, 10 unter der Fensterbrüstungslinie 8 liegen (Fig. 5). Die Dachbewegung ist aufgrund dieser Kombination von gleichzeitigen Bewegungsabläufen erheblich beschleunigt.

Durch die hier gezeigte Senkrechtstellung des vorderen Dachteils 10 während der Öffnung stehen bei vollständig abgesenktem Dach 3 die Längsführungsansätze 30, 27, 28, 29 im wesentlichen vertikal und nebeneinander (Fig. 5), so daß ein flaches Paket von wegen der Verkürzung geringer Höhenerstreckung gebildet ist, das etwa hinter den Lehnen einer Sitzreihe ohne große Kofferraumeinschränkung plaziert werden kann. Das hintere Dachteil 4 liegt dann über diesem Paket oder leicht dahinter unter einer Kofferraumklappe und benötigt mit seiner nach außen weisenden Wölbung ebenfalls nur wenig Raum.

## Patentansprüche

1. Cabriolet-Fahrzeug (1) mit zumindest einem flexiblen, von über seinen Längsverlauf hintereinander liegenden Querspriegeln (12;13; 14;15;16) gestützten Dachbereich (10), der zu seiner Öffnung durch Verlagerung von Querspriegeln (12;13;14;15) mit einer Bewegungskomponente in Fahrzeuglängsrichtung verkürzbar ist,
**dadurch gekennzeichnet,**
**daß** mehreren hintereinander liegenden Querspriegeln (13;14;15) jeweils eine Längsführungshilfe (23;24;25) zur Zusammenwirkung mit einem in deren Richtung weisenden Längsführungsansatz (30;27;28) eines weiteren Querspriegels (12;13;14) zugeordnet ist, wobei die Längsführungshilfen (23;24;25) und die Längsführungsansätze (30;27;28;29) von hintereinander liegenden Querspriegeln (12;13; 14;15) bezüglich der vertikalen Fahrzeuglängsmittelebene (21) versetzt zueinander gelegen sind.

2. Cabriolet-Fahrzeug nach Anspruch 1,
**dadurch gekennzeichnet,**
**daß** ein Längsführungsansatz (30;27;28;29) und eine Längsführungshilfe (23;24;25;26) jeweils formstabile Teile umfassen, die ineinander eingreifen und zueinander relativbeweglich sind.

3. Cabriolet-Fahrzeug nach Anspruch 2,
**dadurch gekennzeichnet,**
**daß** eine Eingriffsstellung sowohl bei geschlossenem als auch bei geöffnetem Dachbereich (10) besteht.

4. Cabriolet-Fahrzeug nach einem der Ansprüche 1 bis 3,
**dadurch gekennzeichnet,**
**daß** ein Längsführungsansatz (30;27;28;29) und eine Längsführungshilfe (23;24;25;26) im Eingriffbereich komplementär zueinander geformt sind.

5. Cabriolet-Fahrzeug nach einem der Ansprüche 1 bis 4,
**dadurch gekennzeichnet,**
**daß** die Kraft zur Bewegung des flexiblen Dachabschnitts (10) unabhängig von den Längsführungshilfen (23;24;25;26) und - ansätzen (30;27;28;29) vermittelbar ist.

6. Cabriolet-Fahrzeug (1) nach einem der Ansprüche 1 bis 5,
**dadurch gekennzeichnet,**
**daß** die Kraft zur Bewegung des flexiblen Dachabschnitts über ein in der Erstreckungsebene des flexiblen Dachbereichs (10) liegendes Scherengitter (18) mit senkrecht zur Erstreckungsebene liegenden Schwenkachsen (19) in diesen einleitbar ist.

7. Cabriolet-Fahrzeug nach Anspruch 6,
**dadurch gekennzeichnet,**
**daß** das Scherengitter (18) zentral im Bereich einer Längsmittelebene (21) des Daches (3) angeordnet und von einem einzigen Antrieb (31) bewegbar ist.

8. Cabriolet-Fahrzeug nach einem der Ansprüche 1 bis 7,
**dadurch gekennzeichnet,**
**daß** ein Längsführungsansatz (30;27;28;29) als Rohrabschnitt mit einer Erstreckungskomponente in Fahrzeuglängsrichtung ausgebildet ist.

9. Cabriolet-Fahrzeug nach Anspruch 8,
**dadurch gekennzeichnet,**
**daß** ein Längsführungsansatz (30;27;28;29) entsprechend der Dachwölbung gebogen ist.

10. Cabriolet-Fahrzeug nach einem der Ansprüche 8 oder 9,
**dadurch gekennzeichnet,**
**daß** eine Längsführungshilfe (23;24;25;26) eine Rohrhülse mit einer in Fahrzeuglängsrichtung gelegenen Erstreckungskomponente umfaßt.

11. Cabriolet-Fahrzeug nach Anspruch 10,
**dadurch gekennzeichnet,**
**daß** eine Längsführungshilfe (23;24;25;26) entsprechend der Dachwölbung gegenüber der Horizontalen geneigt ist.

12. Cabriolet-Fahrzeug nach einem der Ansprüche 1 bis 11,
**dadurch gekennzeichnet,**
**daß** eine Mehrzahl von Querspriegeln (12;13;14;15;16) vorgesehen ist, denen außer dem relativ zur Fahrtrichtung (F) am weitesten vorne (12) und dem am weitesten hinten (16) liegenden jeweils zumindest ein Längsführungsansatz (27;28;29) und eine Längsführungshilfe (23;24;25) zugeordnet sind.

13. Cabriolet-Fahrzeug nach Anspruch 12,
**dadurch gekennzeichnet,**
**daß** jedem Querspriegel (13;14;15) außer dem relativ zur Fahrtrichtung (F) am weitesten vorne (12) und dem am weitesten hinten liegenden (16) jeweils symmetrisch zu einer vertikalen Fahrzeuglängsmittelebene (21) zwei Längsführungsansätze (27;28;29) und zwei Längsführungshilfen (23;24;25) zugeordnet sind.

14. Cabriolet-Fahrzeug nach einem der Ansprüche 1 bis 13,
**dadurch gekennzeichnet,**
**daß** an jedem mit zumindest einer Längsführungshilfe (23;24;25) und zumindest einem Längsführungsansatz (27;28;29) versehenen Querspriegel (13;14;15) die Längsführungshilfe (23;24;25) und der Längsführungsansatz (27;28;29) in Fahrzeugquerrichtung einander unmittelbar benachbart liegen.

15. Cabriolet-Fahrzeug nach einem der Ansprüche 1 bis 14,
**dadurch gekennzeichnet,**
**daß** dieses ein starres, eine Heckscheibe (5) umfassendes hinteres Dachteil (4) umfaßt, an das bei geschlossenem Dach (3) in Fahrtrichtung (F) der flexible Dachbereich (10) anschließt.

16. Cabriolet-Fahrzeug nach Anspruch 15,
**dadurch gekennzeichnet,**
**daß** das hintere Dachteil (4) während der Verkürzung des flexiblen Dachbereichs (10) in der Karosserie (6) versenkbar ist.

## Claims

1. A convertible car (1) comprising at least one flexible roof portion (10) supported by transverse roof bows (12; 13; 14; 15; 16) that are located one behind the other in its longitudinal direction, which roof portion, in order to be opened, is shortenable with a motion component in the longitudinal direction of the vehicle by displacement of transverse roof bows (12; 13; 14; 15)
**characterized in that**
one longitudinal guiding support (23; 24; 25), respectively, for interaction with a longitudinal guiding shoulder (30; 27; 28) of a further transverse roof bow (12; 13; 14), which guiding shoulder is directed towards said longitudinal guiding support, is allocated to a plurality of transverse roof bows (13; 14; 15) that are located one behind the other, the longitudinal guiding supports (23; 24; 25) and the longitudinal guiding shoulders (30; 27; 28; 29) of transverse roof bows (12; 13; 14; 15), which are located one behind the other, are offset with respect to each other with regard to the vertical longitudinal center plane (21) of the vehicle.

2. The convertible car according to claim 1,
**characterized in that**
a longitudinal guiding shoulder (30; 27; 28; 29) and a longitudinal guiding support (23; 24; 25; 26) each comprise dimensionally stable parts that engage with each other and are movable relative to each other.

3. The convertible car according to claim 2,
**characterized in that**
an engagement state exists in the closed state as well as in the opened state of the roof portion (10).

4. The convertible car according to one of claims 1 to 3,
**characterized in that**
a longitudinal guiding shoulder (30; 27; 28; 29) and a longitudinal guiding support (23; 24; 25; 26) are formed complementary to each other in the engagement portion.

5. The convertible car according to one of claims 1 to 4,
**characterized in that**
the force for moving the flexible roof section (10) can be transferred independently of the longitudinal guiding supports (23; 24; 25; 26) and the longitudinal guiding shoulders (30; 27; 28; 29).

6. The convertible car (1) according to one of claims 1 to 5,
**characterized in that**
the force for moving the flexible roof portion can be introduced into said flexible roof portion via a slidable lattice grate (18) positioned in the extension plane of the flexible roof portion and having axes of rotation (19) that are directed perpendicular to the extension plane.

7. The convertible car according to claim 6,
**characterized in that**
the slidable lattice grate (18) is arranged centrally in the area of a longitudinal center plane (21) of the roof (3), and movable by a single drive (31).

8. The convertible car according to one of claims 1 to 7,
**characterized in that**
a longitudinal guiding shoulder (30; 27; 28; 29) is formed as a pipe section with a extension component in the longitudinal direction of the vehicle.

9. The convertible car according to claim 8,
**characterized in that**
a longitudinal guiding shoulder (30; 27; 28; 29) is bent corresponding to the roof curvature.

10. The convertible car according to one of claims 8 or 9,
**characterized in that**
a longitudinal guiding support (23; 24; 25; 26) comprises a pipe bushing with a extension component that is arranged in the longitudinal direction of the vehicle.

11. The convertible car according to claim 10,
**characterized in that**
a longitudinal guiding support (23; 24; 25; 26) is inclined relative to the horizontal line, in accordance with the roof curvature.

12. The convertible car according to one of claims 1 to 11,
**characterized in that**
a plurality of transverse roof bows (12; 13; 14; 15; 16) are provided, to each of which roof bows at least one longitudinal guiding shoulder (27; 28; 29) and one longitudinal guiding support (23; 24; 25) are allocated, except for those roof bows that are located foremost (12) and rearmost (16) relative to the driving direction (F).

13. The convertible car according to claim 12,
**characterized in that**
two longitudinal guiding shoulders (27; 28; 29) and two longitudinal guiding supports (23; 24; 25), each being symmetrically to a vertical longitudinal center plane of the vehicle, are allocated to each of the transverse roof bows (13; 14; 15), except for those roof bows that are located foremost (12) and rearmost (16) relative to the driving direction (F).

14. The convertible car according to one of claims 1 to 13,
**characterized in that**
the longitudinal guiding support (23; 24; 25) and the longitudinal guiding shoulder (27; 28; 29) are positioned directly adjacent to each other in the transverse direction of the vehicle at each of the transverse roof parts (13; 14; 15) that are provided with at least one longitudinal guiding support (23; 24; 25) and at least one longitudinal guiding shoulder (27; 28; 29),.

15. The convertible car according to one of claims 1 to 14,
**characterized in that**
it comprises an inflexible rear roof part (4) comprising a rear window (5), on which the flexible roof portion (10) adjoins in driving direction (F) when the roof (3) is closed.

16. The convertible car according to claim 15,
**characterized in that**
the rear roof part (4) is retractable into the car body (6) during shortening of the flexible roof portion (10).

## Revendications

1. Véhicule de type cabriolet (1) comprenant au moins une zone de toit (10) flexible, soutenue par des arceaux transversaux (12 ; 13 ; 14 ; 15 ; 16) disposés l'un derrière l'autre sur son extension longitudinale, laquelle zone peut être rétractée jusqu'à son ouverture par déplacement des arceaux transversaux (12 ; 13 ; 14 ; 15) avec une composante de mouvement dans la direction longitudinale du véhicule,
**caractérisé en ce que**
l'on affecte respectivement à plusieurs arceaux transversaux (13 ; 14 ; 15) disposés l'un derrière l'autre un auxiliaire de guidage longitudinal (23 ; 24 ; 25) pour coopérer avec une broche de guidage longitudinal (30 ; 27 ; 28), tournée dans sa direction, d'un autre arceau transversal (12 ; 13 ; 14), dans lequel les auxiliaires de guidage longitudinal (23 ; 24 ; 25) et les broches de guidage longitudinal (30 ; 27 ; 28 ; 29) des arceaux transversaux (12 ; 13 ; 14 ; 15) disposés l'un derrière l'autre sont mutuellement décalés par rapport aux plan central longitudinal (21) du véhicule.

2. Véhicule de type cabriolet selon la revendication 1, **caractérisé en ce que**
une broche de guidage longitudinal (30 ; 27 ; 28 ; 29) et
un auxiliaire de guidage longitudinal (23 ; 24 ; 25 ; 26) comprennent respectivement des parties de forme stable, qui sont mobiles l'une par rapport à l'autre.

3. Véhicule de type cabriolet selon la revendication 2, **caractérisé en ce que**
il existe une position de prise tant lorsque la zone de
toit (10) est fermée que lorsqu'elle est ouverte.

4. Véhicule de type cabriolet selon l'une quelconque des revendications 1 à 3,
**caractérisé en ce que**
une broche de guidage longitudinal (30 ; 27 ; 28 ; 29) et un auxiliaire de guidage longitudinal (23 ; 24 ; 25 ; 26) sont formés de manière mutuellement complémentaire dans la zone de prise.

5. Véhicule de type cabriolet selon l'une quelconque des revendications 1 à 4,
**caractérisé en ce que**
la force permettant de déplacer la section de toit flexible (10) peut être transmise indépendamment des auxiliaires (23 ; 24 ; 25 ; 26) et des broches de guidage longitudinal (30 ; 27 ; 28 ; 29).

6. Véhicule de type cabriolet (1) selon l'une quelconque des revendications 1 à 5,
**caractérisé en ce que**
la force permettant de déplacer la section de toit flexible sur une grille en ciseaux (18), située dans le plan d'extension de la zone de toit flexible (10), avec des axes de pivotement (19) disposés perpendiculairement au plan d'extension, peut être induite dans ceux-ci.

7. Véhicule de type cabriolet selon la revendication 6,
**caractérisé en ce que**
la grille en ciseaux (18) est aménagée au centre dans la zone d'un plan central longitudinal (21) du toit et peut être déplacée par un seul dispositif d'entraînement (31).

8. Véhicule de type cabriolet selon l'une quelconque des revendications 1 à 7,
**caractérisé en ce que**
une broche de guidage longitudinal (30 ; 27 ; 28 ; 29) se présente sous la forme d'une section tubulaire ayant une composante d'extension dans la direction longitudinale du véhicule.

9. Véhicule de type cabriolet selon la revendication 8,
**caractérisé en ce que**
une broche de guidage longitudinal (30 ; 27 ; 28 ; 29) est cintrée en fonction de la courbure du toit.

10. Véhicule de type cabriolet selon l'une quelconque des revendications 8 ou 9,
**caractérisé en ce que**
un auxiliaire de guidage longitudinal (23 ; 24 ; 25 ; 26) comprend une douille tubulaire avec une composante d'extension orientée dans la direction longitudinale du véhicule.

11. Véhicule de type cabriolet selon la revendication 10,
**caractérisé en ce que**
un auxiliaire de guidage longitudinal (23 ; 24 ; 25 ; 26) est incliné par rapport à l'horizontale en fonction de la courbure du toit.

12. Véhicule de type cabriolet selon l'une quelconque des revendications 1 à 11,
**caractérisé en ce que**
l'on prévoit une pluralité d'arceaux transversaux (12 ; 13 ; 14 ; 15 ; 16), auxquels on affecte, à l'exception de celui situé le plus en avant (12) et de celui situé le plus en arrière (16) par rapport au sens de conduite (F), respectivement, au moins une broche de guidage longitudinal (27 ; 28 ; 29) et un auxiliaire de guidage longitudinal (23 ; 24 ; 25).

13. Véhicule de type cabriolet selon la revendication 12,
**caractérisé en ce que**,
à chaque arceau transversal (13 ; 14 ; 15), à l'exception de celui situé le plus en avant (12) et celui situé le plus en arrière (16) par rapport au sens de conduite (F), on affecte de manière respectivement symétrique à un plan central longitudinal vertical (21) du véhicule deux broches de guidage longitudinal (27 ; 28 ; 29) et deux auxiliaires de guidage longitudinal (23 ; 24 ; 25).

14. Véhicule de type cabriolet selon l'une quelconque des revendications 1 à 13,
**caractérisé en ce que**
l'auxiliaire de guidage longitudinal (23 ; 24 ; 25) et la broche de guidage longitudinal (27 ; 28 ; 29) sont directement adjacents l'un à l'autre dans la direction transversale du véhicule sur chaque arceau transversal (13 ; 14 ; 15) équipé d'au moins un auxiliaire de guidage longitudinal (23 ; 24 ; 25) et d'au moins une broche de guidage longitudinal (27 ; 28 ; 29).

15. Véhicule de type cabriolet selon l'une quelconque des revendications 1 à 14,
**caractérisé en ce que**
celui-ci comprend une partie de toit arrière rigide (4) comprenant une lunette arrière (5), à laquelle se raccorde la zone de toit flexible (10) lorsque le toit (3) est fermé dans le sens de conduite (F).

16. Véhicule de type cabriolet selon la revendication 15,
**caractérisé en ce que**
la partie de toit arrière (4) est escamotable pendant la rétraction de la zone de toit flexible (10) dans la carrosserie (6).
